# EUROPÄISCHE PATENTSCHRIFT

(11) **EP 1 713 606 B1**
(45) Veröffentlichungstag und Bekanntmachung des Hinweises auf die Patenterteilung: **02.04.2014**
(21) Anmeldenummer: 05714955.1
(22) Anmeldetag: 10.02.2005
(51) Int. Cl.: B23B 31/107, B23B 29/04

(54) **SPANNELEMENT FÜR WERKZEUGSPANNER**
CLAMPING ELEMENT FOR TOOL-HOLDERS
ELEMENT DE SERRAGE POUR PORTE-OUTILS

(30) Priorität: 12.02.2004 DE 102004009217
(43) Veröffentlichungstag der Anmeldung: 25.10.2006
(60) Teilanmeldung: 10010504.8
(73) Patentinhaber: Gühring, Jörg, Dr., 72458 Albstadt (DE)
(72) Erfinder: MATHEIS, Klaus, 88605 Sauldorf (DE)
(74) Vertreter: Meitinger, Thomas Heinz
(86) Internationale Anmeldenummer: PCT/DE2005/000230
(87) Internationale Veröffentlichungsnummer: WO 2005/077576

(56) Entgegenhaltungen:
- WO-A-99/37428
- WO-A1-2005/028148
- DE-A1- 4 211 034
- DE-A1- 4 220 873
- DE-A1- 4 221 735
- US-A- 4 575 293
- US-A- 5 957 639

## Beschreibung

Die Erfindung betrifft ein Spannelement einer Kupplung zur lösbaren dreh- und axialfesten Fixierung von Bauteilen, insbesondere von Werkzeugkomponenten, an entsprechenden Trägerteilen, wie z. B. an einer Werkzeuggrundaufnahme.

Die Erfindung bezieht sich auf Kupplungsvorrichtungen zwischen einem Werkstück- oder Werkzeugträgerteil, wie z. B. einem Werkzeugsystemmodul, beispielsweise in Form einer Werkzeuggrundaufnahme und einer zugehörigen Handhabungseinrichtung, wie z. B. einer Werkzeugmaschine, beispielsweise in der Ausgestaltung als Bohr-, Dreh- oder Fräsmaschine. Die Kupplungsvorrichtung dient dabei sowohl für stehende als auch für bewegte, wie z. B. drehende Werkstück- oder Werkzeugträgerteile, wie z. B. Werkzeugsystemmodule. Das Spannsystem zur lösbaren Verbindung zweier vorzugsweise rotationssymmetrischer Teile, von denen ein Teil einen vorzugsweise zylindrischen oder konischen Hohlschaft und das andere Teil einen entsprechenden Aufnahmeabschnitt zur passungsgenauen Aufnahme des Hohlschafts aufweist. Das Spannsystem umfasst eine konzentrisch im Aufnahmeabschnitt angeordnete Spanneinrichtung, die sich im aneinandergefügten Zustand der beiden Teile in den Hohlschaft des einen Teils erstreckt und zumindest zwei gegensinnig bewegbare Spannkörper sowie eine die Spannkörper antreibende Betätigungseinrichtung, durch welche die Spannkörper synchron in und außer Eingriff mit einer hinterschnittenen Spannschulter des Hohlschafts bewegbar sind, wodurch zwischen Planflächen der beiden zu verbindenden Teile eine Anpresskraft erzeugt wird. Erfindungsgemäß sind die Spannelemente radial gleitbeweglich.

Als erste Ausführungsform der Erfindung wird ein Spannsystem zur lösbaren Verbindung zweier rotationssymmetrischer Teile zur Verfügung gestellt, von denen ein Teil einen zylindrischen oder konischen Hohlschaft und das andere Teil einen entsprechenden Aufnahmeabschnitt zur passungsgenauen Aufnahme des Hohlschafts aufweist, mit einer konzentrisch im Aufnahmeabschnitt angeordneten Spanneinrichtung, die sich im aneinandergefügten Zustand der beiden Teile in den Hohlschaft des einen Teils erstreckt, wobei das Spannsystem umfasst: einen Grundkörper, in dem ein erstes und ein zweites Spannsegment zum Verspannen der Teile miteinander angeordnet sind, und eine Spannschraube, wobei der Grundkörper eine Ausnehmung zur radialen Auslenkung der Spannsegmente aufweist, wobei die Ausnehmung in Richtung der Längsachse der Spannschraube gesehen an der zum Werkzeug gerichteten Seite abgerundet oder abgeschrägt ausgebildet ist, wobei das erste und das zweite Spannsegment in Richtung der Längsachse der Spannschraube gesehen an der zum Werkzeug gerichteten Seite abgerundet oder abgeschrägt ausgebildet sind, wobei durch die Spannschraube das erste und das zweite Spannsegment radial auslenkbar sind, wobei das Spannsystem eine Spindel (3) aufweist, in der ein Langloch (4) angeordnet ist, durch das ein zentrisch angeordnetes Kühlmittelrohr (2) durch fürhbar ist, wobei die Spindel durch die Spannschraube antreibbar ist und das erste Spannsegment zur radialen Auslenkung mit der Spannschraube in Eingriff ist und das zweite Spannsegment zur radialen Auslenkung mit der Spindel in Eingriff ist.

Durch die erfindungsgemäße Ausbildung des Spannsystems mit einer zumindest teilweise abgerundeten Ausnehmung können die entsprechenden Spannschrauben grösser dimensioniert werden und/oder durch die abgerundete Ausbildung der Spannsegmente können die jeweiligen Spannschraubenköpfe grösser dimensioniert werden.

Beispielhafte Ausführungsformen werden in den abhängigen Ansprüchen beschrieben.

Gemäß einer beispielhaften Ausführungsform der Erfindung wird ein Spannsystem zur Verfügung gestellt, wobei die Übergänge der Konturen der Spannsegmente an der zum Werkzeug gerichteten Seite zum Übergang der axial parallel verlaufenden Kontur, in einem zur x-Achse verlaufendem Winkel von 30° bis 80° abgeschrägt ausgebildet sind.

In einer weiteren erfindungsgemäßen Ausführungsform wird ein Spannsystem zur Verfügung gestellt, wobei die Übergänge der Kontur der Anlagefläche an der zum Werkzeug gerichteten Seite zur Kontur der axial parallel verlaufenden Ausnehmung, in einem zur x-Achse verlaufenden Winkel von 30° bis 80° abgeschrägt ausgebildet sind.

Gemäß einem weiteren Ausführungsbeispiel der vorliegenden Erfindung wird ein Spannsystem zur Verfügung gestellt, wobei die Anlagefläche an der zum Werkzeug gerichteten Seite abgerundet und abgeschrägt in einem zur x-Achse verlaufenden Winkel von 30° bis 80° ausgebildet ist.

Gemäß einer beispielhaften Ausführungsform der Erfindung wird ein Spannsystem zur Verfügung gestellt, wobei die Kontur der Spannsegmente an der zum Werkzeug gerichteten Seite abgerundet und abgeschrägt in einem zur x-Achse verlaufenden Winkel von 30° bis 80° ausgebildet ist.

Das Spannsystem bezieht sich auf hohe Drehzahlen und zur lösbaren Verbindung zweier Teile, wie Sie aus den Patentschriften DE 42 11 034 bekannt sind. Eine sehr leistungsfähige Kupplung für den Bereich der Schnittstelle zwischen Werkzeugmaschine und Werkzeugmodul ist in der EP 0291 048 B1 und EP 0409973 B1 sowie EP 01035934 B1 und EP 1175272 B1 beschrieben und es kommt darauf an, die zu verbindenden Teile zuverlässig und fest aneinander zu klammern.

Erfindungsgemäß wird ein Spannelement 1 für die Trockenbearbeitung wie z. B. (MMS-Technologie) sowie auch für die nasse Bearbeitung geschaffen, das für optimalen Kraftfluss zwischen den zu kuppelnden Teilen sorgt. Durch das zentrisch in der Kupplung angeordnete Kühlkanalrohr 2 wurden die Geometrien der Spannelemente geändert. In der Spindel 3 befindet sich ein Langloch, durch welches das Kühlmittelrohr geführt wird. Das in der Spindel befindliche Langloch 4 besitzt ein radiales Spiel, welches die radiale Auslenkung der Spannsegmente 5 kompensiert. Durch die konstruktiv veränderte Ausbildung 6 der Spannsegmente zwischen Grundkörper 7 und Spannsegment 5 ist die Kraftverteilung für die Abstützung der Spannsegmente grösser. Die neue geometrische Ausbildung der Spannsegmente, ergeben im Grundköper neue Konturen mit weicheren Übergängen und dadurch einen besseren Kräfteverlauf, was einen Materialbruch um ein vielfaches vermindert sowie eine zuverlässige bzw. größere Spannung gewährleistet.

Die Spannsegmente besitzen durch die geänderte Ausbildung eine größere Fläche, welche dadurch größere Spannschrauben 8 unterbringen lässt. Durch die Spannschraube wird das Spannelement radial ausgelenkt 9.

Die Spindel die sich zwischen der Spannschraube und dem Spannsegment befindet, besitzt im gespanntem Zustand der Kupplung, am Gewindeauslauf der Spannschraube mehr Gewindegänge im Eingriff 10, so dass eine höhere Spannsicherheit gewährleistet werden kann.

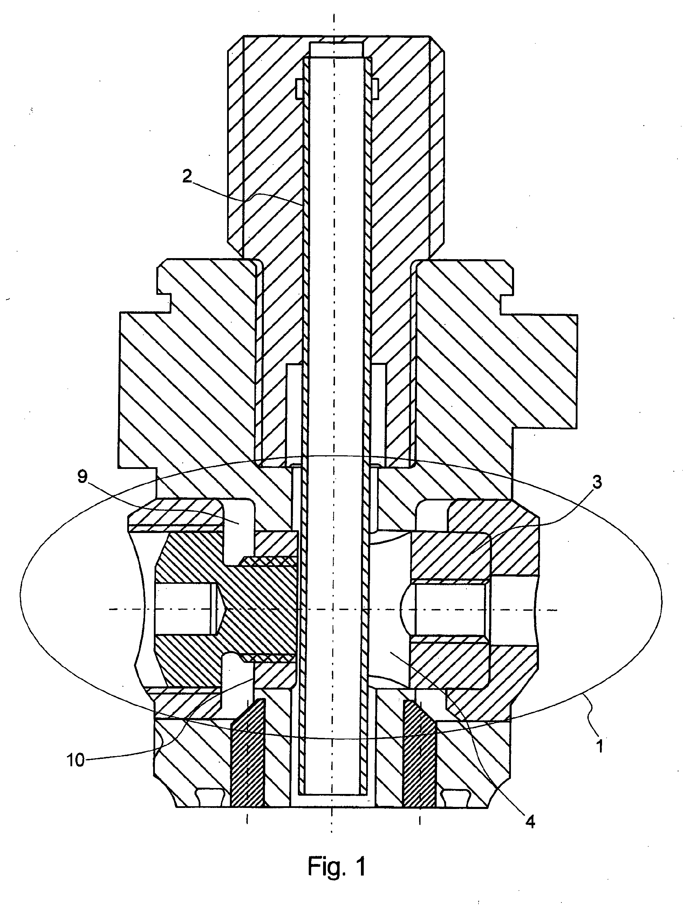

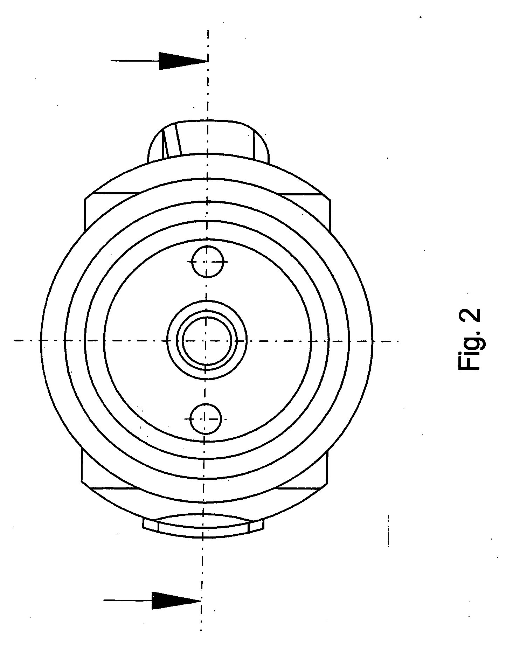

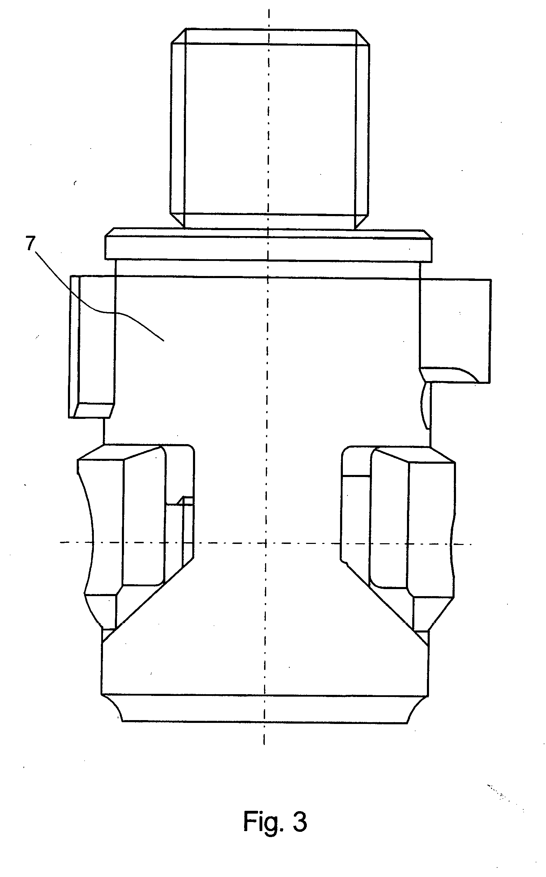

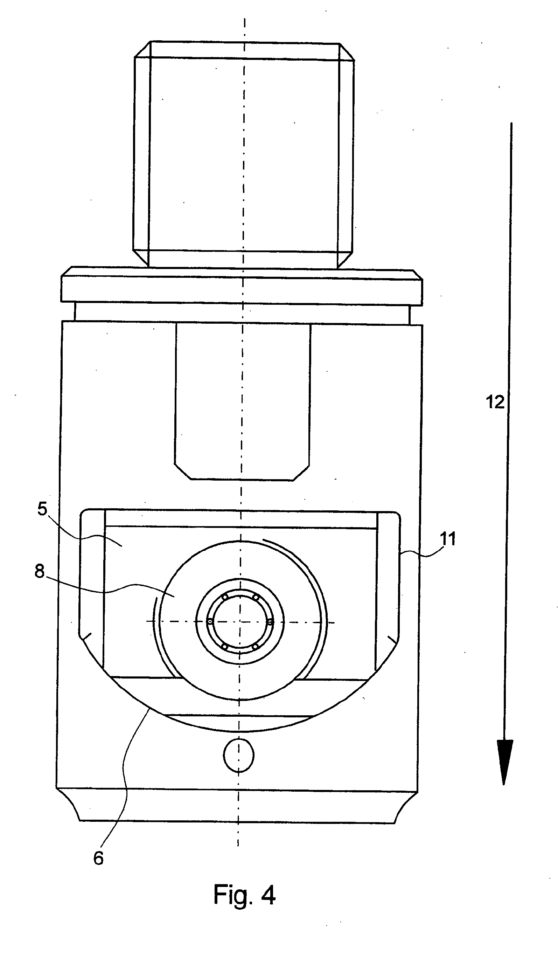

## Patentansprüche

1. Spannsystem zur lösbaren Verbindung zweier rotationssymmetrischer Teile, von denen ein Teil einen zylindrischen oder konischen Hohlschaft und das andere Teil einen entsprechenden Aufnahmeabschnitt zur passungsgenauen Aufnahme des Hohlschafts aufweist, mit einer konzentrisch im Aufnahmeabschnitt angeordneten Spanneinrichtung, die sich im aneinandergefügten Zustand der beiden Teile in den Hohlschaft des einen Teils erstreckt, wobei das Spannsystem umfasst: einen Grundkörper (7), in dem ein erstes und ein zweites Spannsegment (5) zum Verspannen der Teile miteinander angeordnet sind, und eine Spannschraube (8), wobei der Grundkörper (7) eine Ausnehmung (6) zur radialen Auslenkung der Spannsegmente (5) aufweist, wobei die Ausnehmung (6) in Richtung der Längsachse der Spannschraube gesehen an der zum Werkzeug gerichteten Seite abgerundet oder abgeschrägt ausgebildet ist, wobei das erste und das zweite Spannsegment (5) in Richtung der Längsachse der Spannschraube gesehen an der zum Werkzeug gerichteten Seite abgerundet oder abgeschrägt ausgebildet sind, wobei durch die Spannschraube (8) das erste und das zweite Spannsegment (5) radial auslenkbar sind, **dadurch gekennzeichnet, dass** das Spann-system eine Spindel (3) aufweist, in der ein Langloch (4) angeordnet ist, durch das ein zentrisch angeordnetes Kühlmittelrohr (2) durchführbar ist, wobei die Spindel (3) durch die Spannschraube (8) antreibbar ist und das erste Spannsegment (5) zur radialen Auslenkung mit der Spannschraube (8) in Eingriff ist und das zweite Spannsegment zur radialen Auslenkung mit der Spindel (3) in Eingriff ist.

2. Spannsystem nach Anspruch 1, **dadurch gekennzeichnet, dass** die Übergänge der Konturen der Spannsegmente an der zum Werkzeug gerichteten Seite zum Übergang der axial parallel verlaufenden Kontur, in einem zur x-Achse verlaufendem Winkel von 30° bis 80° abgeschrägt ausgebildet sind.

3. Spannsystem nach Anspruch 1, **dadurch gekennzeichnet, dass** die Übergänge der Kontur der Anlagefläche an der zum Werkzeug gerichteten Seite (12) zur Kontur der axial parallel verlaufender Ausnehmung, in einem zur x-Achse verlaufendem Winkel von 30° bis 80° abgeschrägt ausgebildet sind.

4. Spannsystem nach Anspruch 1, **dadurch gekennzeichnet, dass** die Anlagefläche an der zum Werkzeug gerichteten Seite (12) abgerundet und abgeschrägt in einem zur x-Achse verlaufendem Winkel von 30° bis 80° ausgebildet ist.

5. Spannsystem nach Anspruch 1, **dadurch gekennzeichnet, dass** die Kontur der Spannsegmente an der zum Werkzeug gerichteten Seite abgerundet und abgeschrägt in einem zur x-Achse verlaufendem Winkel von 30° bis 80° ausgebildet ist.

## Claims

1. A clamping system for detachable connection of two rotationally symmetrical parts of which one part has a cylindrical or conical hollow shank and the other part has a corresponding receiving portion for receiving the hollow shank in an exactly fitting manner, with a clamping device concentrically arranged in the receiving portion, which clamping device extends in the joined state of the two parts into the hollow shank of the one part, the clamping device comprising: a base body (7), in which a first and a second clamping segment (5) are arranged for clamping the parts together, a clamping screw (8), wherein the base body (7) has a recess (6) for radial deflection of the clamping segments (5), wherein as seen in the direction of the longitudinal axis of the clamping screw the recess (6) is formed rounded or beveled on the tool facing side, wherein as seen in the direction of the longitudinal axis of the clamping screw the first and the second clamping segment (5) are formed rounded or beveled, wherein the first and the second clamping segment (5) are radially deflectable by means of the clamping screw (8), **characterized in that** the clamping system has a spindle (3), in which a slot hole (4) is arranged, through which a centrally arranged coolant tube (2) may be passed, wherein the spindle (3) is drivable by means of the clamping screw(8) and the first clamping segment (5) is engaged with the clamping screw (8) for radial deflection and the second clamping segment is engaged with the spindle (3) for radial deflection.

2. The clamping system according to claim 1, **characterized in that** the transitions of the contours of the clamping segments on the tool facing side are, with regard to the transition of the axially parallel contour, formed slanted in an angle of 30° to 80° with regard to the x-axis.

3. The clamping system according to claim 1, **characterized in that** the transitions of the contour of the bearing surface on the tool facing side (12) are, with regard to the contour of the axially parallel recess, formed slanted in an angle of 30° to 80° with regard to the x-axis.

4. The clamping system according to claim 1, **characterized in that** the bearing surface on the tool facing side (12) is formed rounded and slanted in an angle of 30° to 80° with regard to the x-axis.

5. The clamping system according to claim 1, **characterized in that** the contour of the clamping segments on the tool facing side is formed rounded and slanted in an angle of 30° to 80° with regard to the x-axis.

## Revendications

1. Système de serrage pour l'accouplement amovible de deux pièces à symétrie de rotation, dont l'une présente une queue creuse cylindrique ou conique, et l'autre une partie de réception correspondante pour une réception à précision d'ajustement de la queue creuse, avec un dispositif de serrage disposé concentriquement dans la partie de réception, et qui s'étend dans la queue creuse de la première pièce en état d'assemblage des deux pièces, ledit système de serrage comprenant : un corps de base (7) où sont disposés un premier et un deuxième segments de serrage (5) pour le serrage des pièces l'une avec l'autre, et une vis de serrage (8), le corps de base (7) présentant un évidement (6) pour le débattement radial des segments de serrage (5), ledit évidement (6) étant arrondi ou chanfreiné sur le côté opposé à l'outil, quand il est vu dans la direction de l'axe longitudinal de la vis de serrage, le premier et le deuxième segments de serrage (5) étant arrondis ou chanfreinés sur le côté opposé à l'outil, quand il sont vus dans la direction de l'axe longitudinal de la vis de serrage, un débattement radial pouvant être appliqué par la vis de serrage (8) au premier et au deuxième segments de serrage (5), ledit système de serrage étant **caractérisé en ce qu'**il comporte une broche (3) où est ménagé un trou oblong (4) dans lequel peut être passé un conduit de réfrigérant (2) centré, la broche (3) étant entraînable par la vis de serrage (8) et le premier segment de serrage (5) étant en prise avec la vis de serrage (8) pour le débattement radial, et le deuxième segment de serrage étant en prise avec la broche (3) pour le débattement radial.

2. Système de serrage selon la revendication 1, **caractérisé en ce que** les transitions des contours des segments de serrage sur le côté opposé à l'outil vers la transition du contour s'étendant parallèlement dans le sens axial, sont chanfreinéees suivant un angle compris entre 30° et 80° par rapport à l'axe x.

3. Système de serrage selon la revendication 1, **caractérisé en ce que** les transitions des contours des surfaces de contact des segments de serrage sur le côté (12) opposé à l'outil vers le contour de l'évidement s'étendant parallèlement dans le sens axial, sont chanfreinéees suivant un angle compris entre 30° et 80° par rapport à l'axe x.

4. Système de serrage selon la revendication 1, **caractérisé en ce que** la surface de contact sur le côté (12) opposé à l'outil est arrondie et chanfreinée suivant un angle compris entre 30° et 80° par rapport à l'axe x.

5. Système de serrage selon la revendication 1, **caractérisé en ce que** le contour des segments de serrage sur le côté opposé à l'outil est arrondi et chanfreiné suivant un angle compris entre 30° et 80° par rapport à l'axe x.
